# EUROPEAN PATENT APPLICATION

(11) **EP 4 535 158 A1**
(43) Date of publication of application: **09.04.2025**
(21) Application number: 23811752.7
(22) Date of filing: 19.05.2023
(51) Int. Cl.: G06F 3/12, B41J 29/00, B41J 29/38, B41J 29/42, G03G 21/00, G06Q 10/20

(54) **SERVER, PRINTER, AND APPLICATION PROGRAM FOR TERMINAL DEVICE**

(30) Priority: 24.05.2022 JP 2022084479
(71) Applicant: BROTHER KOGYO KABUSHIKI KAISHA, Nagoya-shi, Aichi 467-8561 (JP)
(72) Inventor: NOGUCHI Sho, Nagoya-shi, Aichi 467-8562 (JP)
(74) Representative: J A Kemp LLP
(86) International application number: PCT/JP2023/018730
(87) International publication number: WO 2023/228880

(57) **Abstract**

Disclosed is a technology enabling improvement in user convenience. A server receives, from a printer, cartridge information related to whether a cartridge installed in the printer is a genuine cartridge or a compatible cartridge. If identification information for identifying the printer is received from a terminal device and the cartridge information received from the printer identified by the identification information indicates that a genuine cartridge is installed in the printer, the server transmits a first message prompting subscription to a service to the terminal device. If the identification information is received from the terminal device and the cartridge information received from the printer identified by the identification information indicates that a compatible cartridge is installed in the printer, the server transmits a second message prompting subscription to a service to the terminal device.

## Description

### TECHNICAL FIELD

The present specification discloses a technique for displaying a message for prompting subscription to a service related to a printer.

### BACKGROUND

Patent Literature 1 discloses a printer that displays a screen offering a toner delivery contract in response to detection of a toner low.

### Citation List

### Patent Literature

[Patent Literature 1] JP2020-111023A

### SUMMARY

### Technical Problem

The present specification discloses a technique capable of improving user convenience.

### Solution to Problem

The present specification discloses a server that provides a service related to a printer. The server may include: a cartridge information receiving unit configured to receive, from the printer, cartridge information related to whether a cartridge installed in the printer is a genuine cartridge provided by a vendor of the printer or a non-genuine cartridge provided by a business entity other than the vendor; a first message transmitting unit configured to transmit, to a terminal device different from the printer, a first message that prompts subscription to the service when identification information for identifying the printer is received from the terminal device and the cartridge information received from the printer identified by the identification information indicates that the genuine cartridge is installed in the printer; and a second message transmitting unit configured to transmit, to the terminal device, a second message that prompts subscription to the service and is different from the first message when the identification information is received from the terminal device and the cartridge information received from the printer identified by the identification information indicates that the non-genuine cartridge is installed in the printer.

According to the configuration, the server can transmit, to the terminal device, an appropriate message corresponding to the type of the cartridge installed in the printer. Accordingly, the convenience for the user can be improved.

The present specification also discloses a printer. The printer may include: a display unit; a print execution unit in which a cartridge is detachably installed; a first display controller configured to, when the cartridge installed in the print execution unit is a genuine cartridge provided by a vendor of the printer, cause the display unit to display a first message that prompts subscription to a service provided by a server; and a second display controller configured to, when the cartridge installed in the print execution unit is a non-genuine cartridge provided by a business entity other than the vendor, cause the display unit to display a second message that prompts subscription to the service and is different from the first message.

According to the configuration, the printer can display an appropriate message according to the type of the cartridge installed in the print execution unit. Accordingly, the convenience for the user can be improved.

The present specification also discloses an application program for a terminal device. The application program may cause a computer of the terminal device to function as following units: a cartridge information receiving unit configured to receive, from a printer, cartridge information related to whether a cartridge installed in the printer is a genuine cartridge provided by a vendor of the printer or a non-genuine cartridge provided by a business entity other than the vendor; a first display controller configured to, when the cartridge information indicates that the genuine cartridge is installed in the printer, cause a display unit of the terminal device to display a first message that prompts subscription to a service which is related to the printer and is provided by a server; and a second display controller configured to, when the cartridge information indicates that the non-genuine cartridge is installed in the printer, cause the display unit to display a second message that prompts subscription to the service and is different from the first message.

According to the configuration, the terminal device can display an appropriate message according to the type of the cartridge installed in the printer. Accordingly, the convenience for the user can be improved.

A control method for implementing the server, a computer program for the server, and a storage medium for storing the computer program are also novel and useful. Further, a control method for implementing the printer, a computer program for the printer, and a storage medium for storing the computer program are also novel and useful. Further, a storage medium for storing the application program and a terminal device implemented by the application program are also novel and useful. Further, a communication system including the printer and the server and a communication system including the printer, the server, and the terminal device are also novel and useful.

### BRIEF DESCRIPTION OF THE DRAWINGS

[FIG. 1] FIG. 1 shows a configuration of a communication system.
[FIG. 2] FIG. 2 shows an example of each table and each screen.
[FIG. 3] FIG. 3 shows a sequence diagram of a printer information registration process.
[FIG. 4] FIG. 4 shows a flowchart of a server process.
[FIG. 5] FIG. 5 shows a sequence diagram of a case A in which a notification screen is displayed on a display unit of a terminal device.
[FIG. 6] FIG. 6 shows a flowchart of a printer process according to a second embodiment.
[FIG. 7] FIG. 7 shows an example of a management table according to a third embodiment.
[FIG. 8] FIG. 8 shows a flowchart of a terminal process according to the third embodiment.
[FIG. 9] FIG. 9 shows a sequence diagram of a case B in which a notification screen is displayed on the display unit of the terminal device according to the third embodiment.

### DETAILED DESCRIPTION

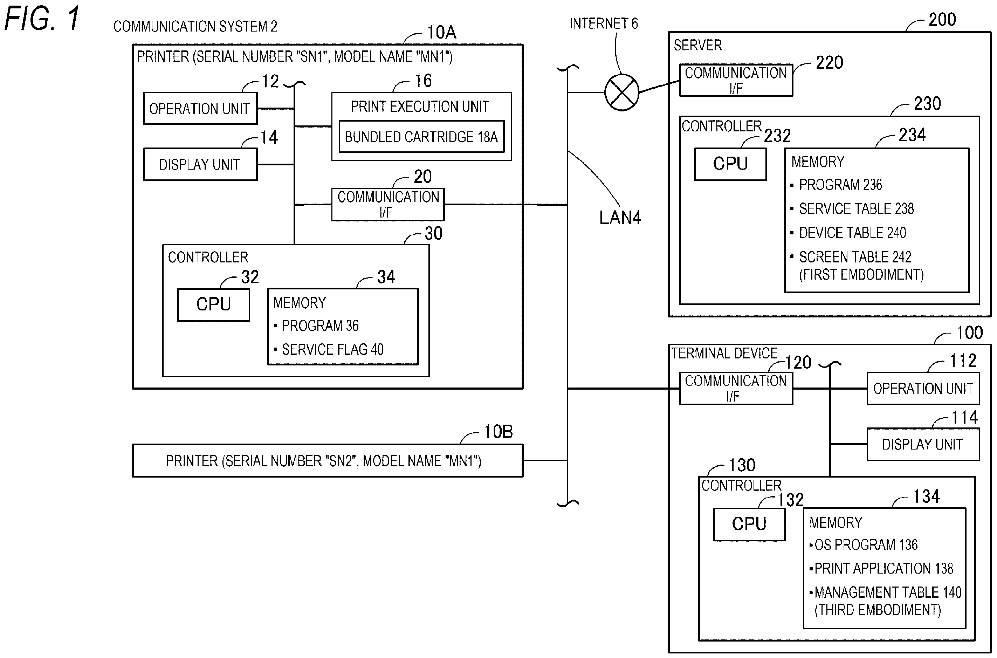

### First embodiment; Configuration of Communication System 2; FIG. 1

As illustrated in FIG. 1, a communication system 2 includes printers 10A and 10B, a terminal device 100, and a server 200. The printers 10A and 10B and the terminal device 100 are connected to a local area network (LAN) 4. The printers 10A and 10B and the terminal device 100 can communicate with each other via the LAN 4. The LAN 4 is connected to Internet 6. The printers 10A and 10B, the terminal device 100, and the server 200 are connected to the Internet 6. The printers 10A and 10B, the terminal device 100, and the server 200 can communicate with each other via the Internet 6. The server 200 provides a flat-rate billing service (hereinafter, referred to as a "flat-rate service") related to a printer and an automatic ordering service. The flat-rate service and the automatic ordering service will be described in detail later. Hereinafter, the printers 10A and 10B may be collectively referred to as a "printer 10".

### Configuration of Printers 10A and 10B

The printer 10A is a peripheral device capable of executing a printing function (that is, a peripheral device such as a PC). The printer 10A may be a multi-function device capable of executing a scanning function, a FAX function, and the like in addition to the printing function. The printer 10A includes an operation unit 12, a display unit 14, a print execution unit 16, a communication interface 20, and a controller 30. The printer 10A has a serial number "SN1" and a model name "MN1". The serial number is an identification number assigned to a printer when the printer is manufactured, and is information for identifying the printer. The model name is information indicating a model of the printer. Hereinafter, the interface may be referred to as "I/F".

The operation unit 12 includes a plurality of keys. A user can operate the operation unit 12 to input various instructions to the printer 10A. The display unit 14 is a display for displaying various types of information.

The print execution unit 16 is an inkjet printing mechanism. The print execution unit 16 has cartridges that contain ink attached thereto. The print execution unit 16 executes printing using the ink in the cartridges. A cartridge number is assigned to each cartridge to identify the cartridge. The cartridge number is a unique character string assigned to each cartridge when a plurality of cartridges are manufactured. The cartridges include a genuine cartridge provided by a vendor of the printer 10A and a non-genuine cartridge provided a business entity other than the vendor. The non-genuine cartridge are available for purchase from retail stores. The genuine cartridge includes a bundled cartridge that is available for purchase at a retail store and is bundled with the printer when the printer is sold, a generic cartridge that is available for purchase at a retail store and is not bundled with the printer when the printer is sold, and a dedicated cartridge that is not available for purchase at a retail store and is sent from the server 200. The non-genuine cartridge and the generic cartridge can be used in a state where the printer does not accept provision of the flat-rate service (hereinafter, referred to as a "service unavailable state"), and cannot be used in a state where the printer accepts provision of the flat-rate service (hereinafter, referred to as a "service available state"). The bundled cartridge can be used in the service unavailable state and the service available state. The dedicated cartridge can be used in the service available state and cannot be used in the service unavailable state. The cartridge is equipped with a memory (IC chip) in which the cartridge number is stored. FIG. 1 shows a state in which a bundled cartridge 18A is installed in the print execution unit 16.

The communication I/F 20 is connected to the LAN 4. The communication I/F 20 may be a wireless I/F or a wired I/F.

The controller 30 includes a CPU 32 and a memory 34. The CPU 32 executes various processes according to a program 36 stored in the memory 34. The memory 34 is implemented by a volatile memory, a non-volatile memory, or the like. The memory 34 further stores a service flag 40. The service flag 40 indicates a value of either "ON" indicating that the printer 10A accepts provision of the flat-rate service or "OFF" indicating that the printer 10A does not accept provision of the provision of the flat-rate service. When the printer 10A is in the service available state, the service flag 40 is set to "ON", and when the printer 10A is in the service unavailable state, the service flag 40 is set to "OFF"

The printer 10B has a configuration similar to the printer 10A except that the printer 10B has a serial number "SN2".

### Configuration of Terminal Device 100

The terminal device 100 is a user terminal such as a desktop PC, a notebook PC, a tablet PC, or a mobile phone (for example, a smartphone). The terminal device 100 includes an operation unit 112, a display unit 114, a communication I/F 120, and a controller 130. Each of the units 112 to 130 is connected to a bus line (reference number omitted).

The operation unit 112 includes a plurality of keys. A user can operate the operation unit 112 to input various instructions to the terminal device 100. The display unit 114 is a display for displaying various types of information. The display unit 114 also functions as a touch panel (that is, an operation unit) that receives an instruction from a user. The communication I/F 120 is connected to the LAN 4. The communication I/F 120 may be a wireless I/F or a wired I/F.

The controller 130 includes a CPU 132 and a memory 134. The CPU 132 executes various processes according to programs 136 and 138 stored in the memory 134. The memory 134 is implemented by a volatile memory, a non-volatile memory, or the like. The memory 134 stores an operating system (OS) program 136 and a print application 138. Hereinafter, the OS program 136 is referred to as "OS 136", and the print application 138 is referred to as "application 138". The OS 136 is a program for controlling basic operations of the terminal device 100. The application 138 is an application for causing the printer 10 to execute printing using the terminal device 100.

### Configuration of Server 200

The server 200 is installed on the Internet 6 by the vendor of the printer 10. In a modification, the server 200 may be installed on the Internet 6 by a business entity other than the vendor. In another modification, the vendor of the printer 10 may use an environment provided by an external cloud computing service without preparing the hardware of the server 200 by itself. In this case, the vendor of the printer 10 may prepare a program (that is, software) for the server 200 and implement the program in the above-mentioned environment to achieve the server 200. As described above, the server 200 provides the flat-rate service and the automatic ordering service. A flat-rate service is a service in which a predetermined amount (hereinafter referred to as a "flat-rate fee") is paid if the number of pages printed in a specified period (for example, one month) is less than or equal to a contracted number of printed pages (for example, 1000 pages), and a billed amount is paid that is the sum of the flat-rate fee and an amount corresponding to the number of printed pages in excess of the contracted number of printed pages if the number of pages printed in the specified period exceeds the contracted number of printed pages. The automatic ordering service is a service for automatically ordering a new dedicated cartridge when a remaining amount of ink in the dedicated cartridge installed in the print execution unit 16 of the printer 10A is equal to or less than a predetermined remaining amount, for example. Note that, in a modification, the server 200 may provide, instead of the flat-rate service, a pay-per-use billing service which is a service in which an amount is paid according to the number of pages printed in a specified period (for example, one month).

The server 200 includes a communication I/F 220 and a controller 230. The communication I/F 220 is connected to the Internet 6. The controller 230 includes a CPU 232 and a memory 234. The CPU 232 executes various processes according to a program 236 stored in the memory 234. The memory 234 is implemented by a volatile memory, a non-volatile memory, or the like. The memory 234 further stores a service table 238, a device table 240, and a screen table 242.

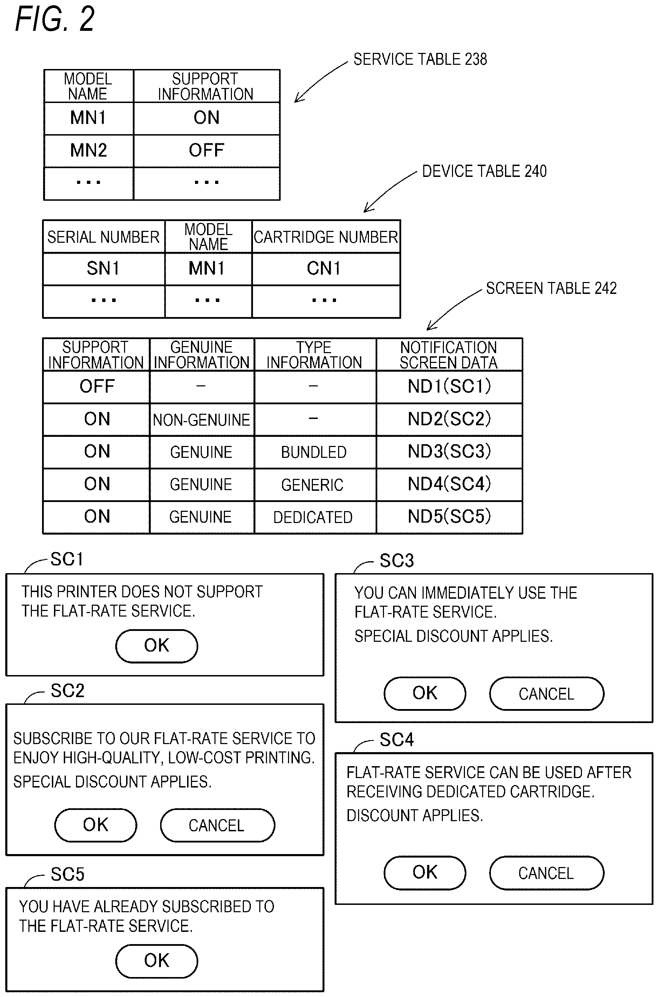

### Configuration of Each Table; FIG. 2

Next, the contents of the service table 238, the device table 240, and the screen table 242 in the server 200 will be described with reference to FIG. 2.

In the service table 238, a model name and support information are stored in association with each other. The support information indicates a value of either "ON" indicating that the flat-rate service is supported or "OFF" indicating that the flat-rate service is not supported. The support information is updated by the administrator of the server 200.

In the device table 240, a serial number, a model name, and a cartridge number are stored in association with one another. Hereinafter, the serial number, the model name, and the cartridge number may be collectively referred to as "printer information".

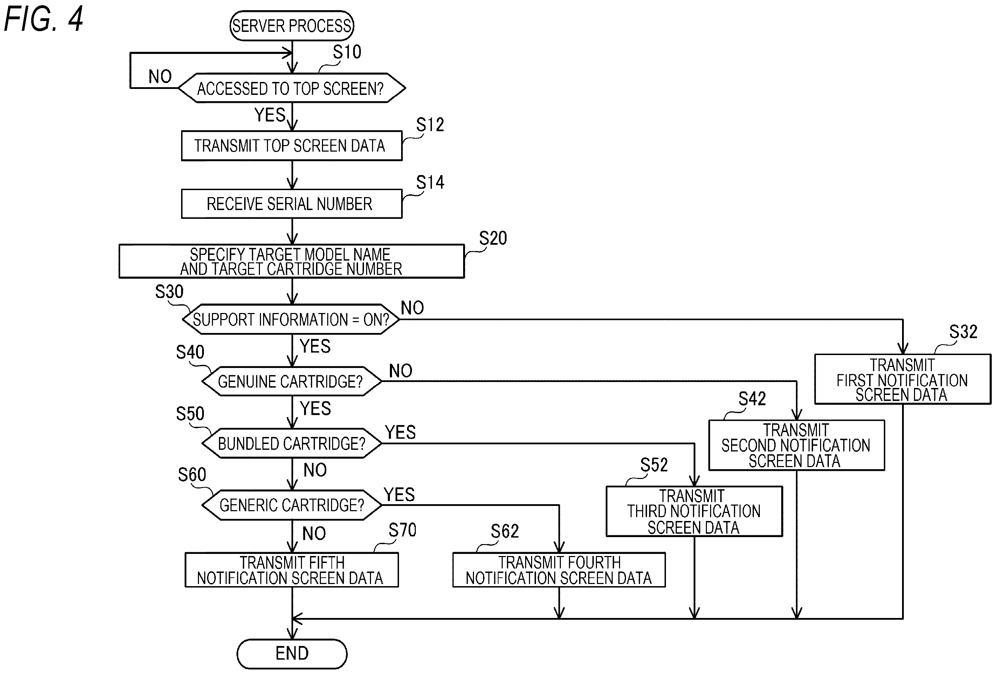

The screen table 242 is a table for determining notification screen data to be transmitted to the terminal device 100 in a server process (see FIG. 4) described later. In the screen table 242, support information, genuine information, type information, and notification screen data are stored in association with one another. The genuine information is either "genuine" indicating that a cartridge is genuine or "non-genuine" indicating that a cartridge is non-genuine. The type information is any one of "bundled" indicating that a cartridge is a bundled cartridge, "generic" indicating that a cartridge is a generic cartridge, and "dedicated" indicating that a cartridge is a dedicated cartridge. The server 200 determines notification screen data to be transmitted to the terminal device 100 using the support information, the genuine information, and the type information. The memory 234 (see FIG. 1) of the server 200 stores cartridge number information for specifying the genuine information and the type information based on the cartridge number in advance. First notification screen data ND1 to fifth notification screen data ND5 will be described in detail later.

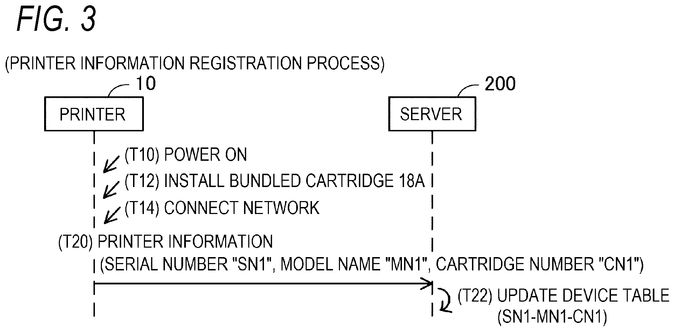

### Printer Information Registration Process; FIG. 3

A printer information registration process in which the printer information of the printer 10A is registered in the device table 240 of the server 200 will be described with reference to FIG. 3. Since all of the following communications are executed via the communication I/Fs 20, 120, and 220, the description of "via the communication I/F 20 (or 120, 220)" will be omitted. In FIGS. 3, 5, and 9, for ease of understanding, the operations executed by the CPU 32 of the printer 10A, the CPU 132 of the terminal device 100, and the CPU 232 of the server 200 will not be described with the CPUs 32, 132, and 232 as the subject, but will be described with the printer 10A, the terminal device 100, and the server 200 as the subject, respectively. The operation executed by a CPU (not shown) of the printer 10B will also be described with the printer 10B as the subject.

A user of the printer 10A performs an operation to turn on the printer 10A at T10, installs the bundled cartridge 18A bundled with the printer 10A in the print execution unit 16 (see FIG. 1) at T12, and performs a network connection operation at T14. Thus, the printer 10A is now capable of communicating with the server 200 via the LAN 4 and the Internet 6. Then, the printer 10A reads the cartridge number "CN1" of the bundled cartridge 18A installed in the print execution unit 16, and transmits the printer information including the serial number "SN1", the model name "MN1", and the cartridge number "CN1" to the server 200 at T20.

When the server 200 receives the printer information from the printer 10A at T20, the server 200 stores the serial number "SN1", the model name "MN1", and the cartridge number "CN1" in the printer information in association with each other in the device table 240 at T22. Thereafter, the printer 10A transmits the printer information to the server 200 every time a predetermined time (for example, 24 hours) elapses. For example, after the bundled cartridge 18A installed in the print execution unit 16 is replaced with a generic cartridge, the printer 10A transmits the printer information including the serial number "SN1", the model name "MN1", and a cartridge number of the generic cartridge to the server 200.

### Server Process; FIG. 4

A server process executed by the CPU 232 of the server 200 will be described with reference to FIG. 4. When the server 200 is turned on, the CPU 232 starts the process of FIG. 4.

In S10, the CP 232 monitors whether the terminal device 100 accesses a top screen. Specifically, the CPU 232 monitors reception of a top screen data request from the terminal device 100. The top screen is a screen for subscribing to the flat-rate service, and includes an input field for a serial number of a printer. When the top screen data request is received from the terminal device 100, the CPU 232 proceeds to S12.

In S12, the CPU 232 transmits the top screen data to the terminal device 100. When the top screen data is received from the server 200, the terminal device 100 displays the top screen. When receiving the input of the serial number to the input field in the top screen, the terminal device 100 transmits the input serial number to the server 200.

In S14, the CPU 232 receives a serial number (hereinafter, may be referred to as a "target serial number") from the terminal device 100.

In S20, the CPU 232 specifies a target model name and a target cartridge number using the target serial number and the device table 240 (see FIG. 2). In the device table 240, the CPU 232 specifies a model name and a cartridge number that are associated with the target serial number as the target model name and the target cartridge number, respectively.

In S30, the CPU 232 determines whether the support information associated with the target model name is "ON" in the service table 238 (see FIG. 2). When the support information is "ON" (YES in S30), the CPU 232 proceeds to S40, and when the support information is "OFF" (NO in S30), the CPU 232 proceeds to S32.

In S32, the CPU 232 specifies the first notification screen data ND1 associated with the support information "OFF" in the screen table 242 (see FIG. 2), and transmits the specified first notification screen data ND1 to the terminal device 100. When the first notification screen data ND1 is received from the server 200, the terminal device 100 displays a first notification screen SC1. As shown in FIG. 2, the first notification screen SC1 includes a non-support message and an OK button. The non-support message includes a message indicating that a target printer identified by the target serial number does not support the flat-rate service. Accordingly, the user can know that the flat-rate service cannot be provided by using the target printer. When S32 of FIG. 4 ends, the CPU 232 ends the process of FIG. 4.

In S40, the CPU 232 determines whether the cartridge (hereinafter, may be referred to as a "target cartridge") installed in the target printer is a genuine cartridge. The CPU 232 specifies the genuine information of the target cartridge using the target cartridge number, and determines whether the specified genuine information is "genuine". The CPU 232 proceeds to S50 when the genuine information is "genuine" (YES in S40), and proceeds to S42 when the genuine information is not "genuine", that is, when the genuine information is "non-genuine" (NO in S40).

In S42, the CPU 232 specifies second notification screen data ND2 associated with the support information "ON" and the genuine information "non-genuine" in the screen table 242 (see FIG. 2), and transmits the specified second notification screen data ND2 to the terminal device 100. When the second notification screen data ND2 is received from the server 200, the terminal device 100 displays a second notification screen SC2. As shown in FIG. 2, the second notification screen SC2 includes a non-genuine message that is a message for prompting subscription to the flat-rate service, an OK button, and a cancel button. The non-genuine message includes a content indicating that high-quality and low-cost printing can be used by subscribing to the flat-rate service and a content indicating that a special discount is applied. When S42 ends, the CPU 232 ends the process of FIG. 4.

In S50, the CPU 232 determines whether the target cartridge is a bundled cartridge. The CPU 232 specifies the type information of the target cartridge using the target cartridge number, and determines whether the specified type information is "bundled". The CPU 232 proceeds to S52 when the type information is "bundled" (YES in S50), and proceeds to S60 when the type information is not "bundled" (NO in S50).

In S52, the CPU 232 specifies third notification screen data ND3 associated with the support information "ON", the genuine information "genuine", and the type information "bundled" in the screen table 242 (see FIG. 2), and transmits the specified third notification screen data ND3 to the terminal device 100. When the third notification screen data ND3 is received from the server 200, the terminal device 100 displays a third notification screen SC3. As shown in FIG. 2, the third notification screen SC3 includes a first genuine message including a notification content for the bundled cartridge, an OK button, and a cancel button. The first genuine message is a message for prompting subscription to the flat-rate service. In addition, the first genuine message includes a content indicating that the flat-rate service can be used immediately by subscribing to the flat-rate service and a content indicating that a special discount is applied. When S52 of FIG. 4 ends, the CPU 232 ends the process of FIG. 4.

In S60, the CPU 232 determines whether the target cartridge is a generic cartridge. The CPU 232 determines whether the type information specified in S50 is "generic". The CPU 232 proceeds to S62 when the type information is "generic" (YES in S60), and proceeds to S70 when the type information is not "generic" (NO in S60). A case where the type information is neither "bundled" nor "generic" is when the type information is "dedicated".

In S62, the CPU 232 specifies fourth notification screen data ND4 associated with the support information "ON", the genuine information "genuine", and the type information "generic" in the screen table 242 (see FIG. 2), and transmits the specified fourth notification screen data ND4 to the terminal device 100. When the fourth notification screen data ND4 is received from the server 200, the terminal device 100 displays a fourth notification screen SC4. As shown in FIG. 2, the fourth notification screen SC4 includes a first genuine message including a notification content for the generic cartridge, an OK button, and a cancel button. The first genuine message is a message for prompting subscription to the flat-rate service. The first genuine message includes a content indicating that the flat-rate service can be used after the dedicated cartridge is received and a content indicating that a general discount is applied. The general discount provides a greater benefit to a user than a special discount. For example, if a free period of the flat-rate fee set in the special discount is "two months", a free period of the flat-rate fee set in the general discount is "one month". When S62 of FIG. 4 ends, the CPU 232 ends the process of FIG. 4.

In S70, the CPU 232 specifies fifth notification screen data ND5 associated with the support information "ON", the genuine information "genuine", and the type information "dedicated" in the screen table 242 (see FIG. 2), and transmits the specified fifth notification screen data ND5 to the terminal device 100. When the fifth notification screen data ND5 is received from the server 200, the terminal device 100 displays a fifth notification screen SC5. As shown in FIG. 2, the fifth notification screen SC5 includes a second genuine message and an OK button. The second genuine message includes a content indicating that a user has already subscribed to the flat-rate service. Accordingly, the user can know that the user has already subscribed to the flat-rate service. When S70 ends, the CPU 232 ends the process of FIG. 4.

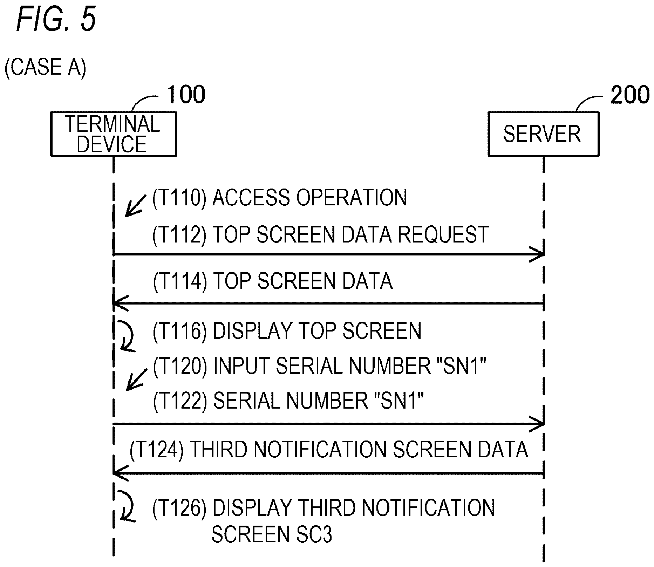

### Case A; FIG. 5

With reference to FIG. 5, a case A will be described in which an operation for subscribing to the flat-rate service is executed in a state where the bundled cartridge 18A bundled when the printer 10A is sold is installed in the print execution unit 16 of the printer 10A. An initial state of the case A is a state after the printer information registration process of FIG. 3 is completed. Therefore, in the device table 240 of the server 200, the serial number "SN1", the model name "MN1", and the cartridge number "CN1" are stored in association with one another (see FIG. 2).

When an access operation for accessing the top screen of the server 200 is received at T110, the terminal device 100 transmits a top screen data request to the server 200 at T112.

When the server 200 receives the top screen data request from the terminal device 100 in T112 (YES in S10 of FIG. 4), the server 200 transmits the top screen data to the terminal device 100 in T114 (S12).

When the top screen data is received from the terminal device 100 at T114, the terminal device 100 displays the top screen at T116. Next, when receiving the input of the serial number "SN1" of the printer 10A at T120, the terminal device 100 transmits the serial number "SN1" to the server 200 at T122.

When the server 200 receives the serial number "SN1" from the terminal device 100 in T122 (S14), the server 200 specifies the model name "MN1" and the cartridge number CN1 which are associated with the target serial number "SN1" in the device table 240 as the target model name "MN1" and the target cartridge number "CN1", respectively (S20). Next, the server 200 determines that the support information associated with the target model name "MN1" is "ON" in the service table 238 (YES in S30), and specifies the genuine information and the type information of the target cartridge as "genuine" and "bundled", respectively, using the target cartridge number "CN1". Next, the server 200 determines that the specified genuine information is "genuine" (YES in S40), determines that the specified type information is "bundled" (YES in S50), and specifies the third notification screen data ND3 in the screen table 242 as the notification screen data to be transmitted to the terminal device 100. Then, the server 200 transmits the third notification screen data ND3 to the terminal device 100 in T124 (S52).

When the terminal device 100 receives the third notification screen data ND3 from the server 200 at T124, the terminal device 100 displays the third notification screen SC3 (see FIG. 2) at T126. Accordingly, the user can know that the flat-rate service can be used immediately and a special discount is applied. Thereafter, the user can subscribe to the flat-rate service.

### Effects of Embodiment

According to the above configuration, when a cartridge installed in the printer 10 (hereinafter, may be referred to as an "installed cartridge") is a genuine cartridge (YES in S40), the server 200 transmits the first genuine message to the terminal device 100 (S52, S62), and when the installed cartridge is a non-genuine cartridge (NO in S40), the server 200 transmits the non-genuine message to the terminal device 100 (S42). According to such a configuration, the server 200 can transmit an appropriate message corresponding to the type of the installed cartridge to the terminal device 100. Accordingly, the convenience for the user can be improved.

Further, when the installed cartridge is a bundled cartridge (YES in S50), the server 200 transmits a first genuine message including the notification content for the bundled cartridge to the terminal device 100 (S52), and when the installed cartridge is a generic cartridge (YES in S60), the server 200 transmits a first genuine message including the notification content for the generic cartridge to the terminal device 100 (S42). According to such a configuration, the server 200 can transmit an appropriate message corresponding to the type of the genuine cartridge to the terminal device 100 in a state where a genuine cartridge is installed in the printer 10. Accordingly, the convenience for the user can be further improved.

Further, when the installed cartridge is a dedicated cartridge (NO in S60), the server 200 transmits the second genuine message to the terminal device 100 (S70). According to this configuration, the user can know that the printer accepts provision of the flat-rate service. Accordingly, the convenience for the user can be improved.

When the printer 10 does not support the flat-rate service (NO in S30), the server 200 transmits the non-support message to the terminal device 100 (S32), when the installed cartridge is a genuine cartridge (YES in S40) and the printer 10 supports the flat-rate service (YES in S30), the server 200 transmits the first genuine message to the terminal device 100 (S52, S62), and when the installed cartridge is a non-genuine cartridge (NO in S40) and the printer 10 supports the flat-rate service (YES in S30), the server 200 transmits the non-genuine message to the terminal device 100 (S42). According to such a configuration, the server 200 can transmit an appropriate message to the terminal device 100 according to whether the printer 10 supports the flat-rate service and the type of the installed cartridge. Accordingly, the convenience for the user can be further improved.

### Correlation

The flat-rate service is an example of a "service related to a printer". The cartridge number is an example of "cartridge information". The serial number is an example of "identification information". The first genuine message and the non-genuine message are examples of a "first message" and a "second message", respectively. The bundled cartridge and the generic cartridge are examples of a "first type of genuine cartridge" and a "second type of genuine cartridge", respectively. The notification content for the bundled cartridge and the notification content for the generic cartridge in the first genuine message are examples of a "first notification content" and a "second notification content", respectively. The dedicated cartridge is an example of a "third type of genuine cartridge". The second genuine message is an example of a "third message". The non-support message is an example of a "fourth message".

T20 in FIG. 3 is an example of a process executed by a "printer information receiving unit". S52 and S62 of FIG. 4 are an example of a process executed by a "first message transmitting unit". S42 in FIG. 4 is an example of a process executed by a "second message transmitting unit".

### Second Embodiment

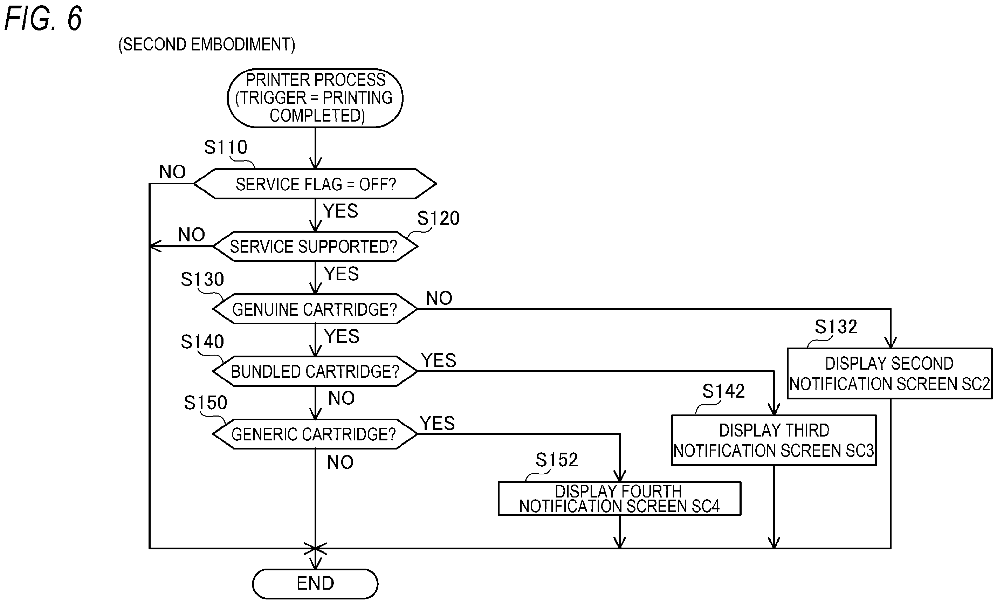

In the embodiment, a printer process of FIG. 6 is executed instead of the server process of FIG. 4. In the present embodiment, the memory 34 (see FIG. 1) of the printer 10A stores the cartridge number information for specifying the genuine information and the type information based on the cartridge number in advance.

### Printer Process; FIG. 6

The printer process executed by the CPU 32 of the printer 10A will be described with reference to FIG. 6. When printing is completed, the CPU 32 starts the process of FIG. 6. In a modification, the CPU 32 may execute the process of FIG. 6 when the printer 10A is turned on or every time a predetermined time elapses.

In S110, the CPU 32 determines whether the service flag 40 in the memory 34 is "OFF". That is, the CPU 32 determines whether the printer 10A accepts provision of the flat-rate service. When the service flag 40 is "OFF" (YES in S110), the CPU 32 proceeds to S120, and when the service flag 40 is "ON", the CPU 32 ends the process of FIG. 6.

In S120, the CPU 32 determines whether the printer 10A supports the flat-rate service. The CPU 32 transmits the model name "MN1" of the printer 10A to the server 200, and receives the support information corresponding to the model name "MN1" from the server 200. Then, the CPU 32 determines whether the received support information indicates "ON". When the support information indicates "ON" (YES in S120), the CPU 32 proceeds to S130, and when the support information indicates "OFF" (NO in S120), the CPU 32 ends the process of FIG. 6.

S130, S140, and S150 are similar to S40, S50, and S60 in FIG. 4, respectively, except that S130, S140, and S150 are executed by the CPU 32, the cartridge number read from a cartridge installed in the printer 10A is used, and the cartridge number information in the memory 34 is used.

The CPU 32 proceeds to S140 when the genuine information is "genuine" (YES in S130), and proceeds to S132 when the genuine information is not "genuine", that is, when the genuine information is "non-genuine" (NO in S130). In S132, the CPU 32 displays the second notification screen SC2 (see FIG. 2) on the display unit 14. When S132 ends, the CPU 32 ends the process of FIG. 6.

The CPU 32 proceeds to S142 when the type information is "bundled" (YES in S140), and proceeds to S150 when the type information is not "bundled" (NO in S140). In S142, the CPU 32 displays the third notification screen SC3 (see FIG. 2) on the display unit 14. When S142 ends, the CPU 32 ends the process of FIG. 6.

When the type information is "generic" (YES in S150), the CPU 32 proceeds to S152, and when the type information is not "generic", that is, when the type information is "dedicated" (NO in S150), the CPU 32 ends the process of FIG. 6. In S152, the CPU 32 displays the fourth notification screen SC4 (see FIG. 2) on the display unit 14. When S142 ends, the CPU 32 ends the process of FIG. 6.

### Effects of Embodiment

According to the above configuration, when a cartridge installed in the print execution unit 16 (that is, the installed cartridge) is the genuine cartridge (YES in S130 of FIG. 5), the printer 10A displays the first genuine message (S142, S152), and when the installed cartridge is the non-genuine cartridge (NO in S130), the printer 10A displays the non-genuine message (S132). According to such a configuration, the printer 10A can display an appropriate message corresponding to the type of the installed cartridge. Accordingly, the convenience for the user can be improved.

Further, when the installed cartridge is a bundled cartridge (YES in S140), the printer 10A displays the first genuine message including the notification content for the bundled cartridge (S142), and when the installed cartridge is a generic cartridge (YES in S150), the printer 10A displays the first genuine message including the notification content for the generic cartridge (S152). According to such a configuration, the printer 10A can display an appropriate message corresponding to the type of the genuine cartridge in a state where a genuine cartridge is installed in the print execution unit 16. Accordingly, the convenience for the user can be further improved.

Further, when the installed cartridge is the dedicated cartridge (NO in S150), the printer 10A does not display the first genuine message and the non-genuine message. When the first genuine message and the non-genuine message are displayed in a state in which the user has already subscribed to the flat-rate service, the user may feel bothered. According to the above configuration, it is possible to prevent the user from feeling bothered.

When the installed cartridge is the genuine cartridge (YES in S130) and the printer 10A supports the flat-rate service (YES in S120), the printer 10A displays the first genuine message (S142, S152); when the installed cartridge is the non-genuine cartridge (NO in S130) and the printer 10A supports the flat-rate service (YES in S120), the printer 10A displays the non-genuine message (S132); and when the printer 10A does not support the flat-rate service (NO in S120), the printer 10A does not display the first genuine message and the non-genuine message. When the first genuine message and the non-genuine message are displayed in a situation where subscription to the flat-rate service is not available, the user may feel bothered. According to the above configuration, it is possible to prevent the user from feeling bothered. Further, the types of printers that can accept provision of the flat-rate service may be expanded. According to the above configuration, the printer 10A can display the first genuine message and the non-genuine message after a state in which the printer 10A cannot accept provision of the flat-rate service is changed to a state in which the printer 10A can accept provision of the flat-rate service. Therefore, the user can know that the printer 10A is now in the state of being capable of accepting provision of the flat-rate service. Accordingly, the convenience for the user can be improved.

Further, when the installed cartridge is the genuine cartridge (YES in S130) and the service flag 40 is "OFF" (YES in S110), the printer 10A displays the first genuine message; when the cartridge is the non-genuine cartridge (NO in S130) and the service flag 40 is "OFF" (YES in S110), the printer 10A displays the non-genuine message; and when the service flag 40 is "ON" (NO in S110), the printer 10A does not display the first genuine message and the non-genuine message. When the first genuine message and the non-genuine message are displayed in a state in which the user has already subscribed to the flat-rate service, the user may feel bothered. According to the above configuration, it is possible to prevent the user from feeling bothered.

### Correlation

The service flag 40 is an example of "service information".

S142 and S152 in FIG. 6 are examples of a process executed by a "first display controller" of a "printer". S132 of FIG. 6 is an example of a process executed by a "second display controller" of the "printer".

### Third Embodiment

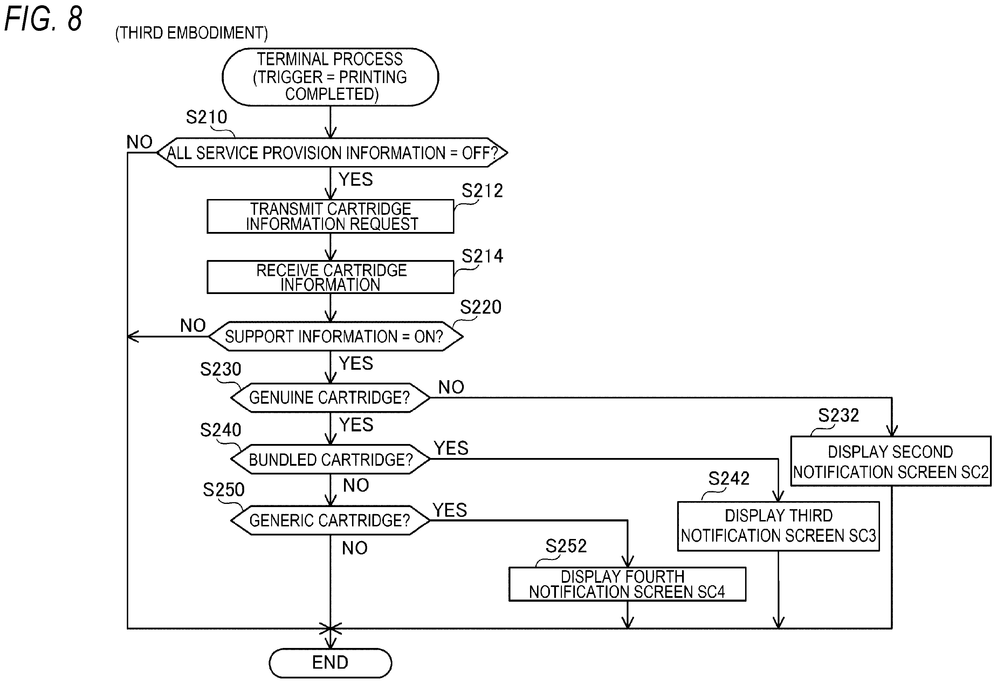

In the third embodiment, a terminal process in FIG. 8 is executed instead of the server process in FIG. 4. As shown in FIG. 1, in the present embodiment, a management table 140 is stored in the memory 134 of the terminal device 100. The memory 134 of the terminal device 100 stores the cartridge number information for specifying the genuine information and the type information based on the cartridge number in advance.

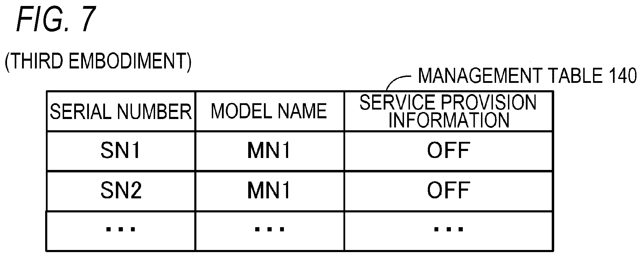

As shown in FIG. 7, in the management table 140, a serial number, a model name, and service provision information are stored in association with each other. The service provision information indicates a value of either "ON" indicating that provision of the flat-rate service is accepted or "OFF" indicating that provision of the flat-rate service is not accepted.

### Terminal Process; FIG. 8

A terminal process executed by the CPU 132 of the terminal device 100 according to the application 138 will be described with reference to FIG. 8. When printing using the application 138 is completed, that is, when a print completion notification is received from the printer 10, the CPU 132 starts the process of FIG. 8. In a modification, the application 138 may execute the process of FIG. 8 when the application 138 is started, or every time a predetermined time elapses in a state where the application 138 is started. Hereinafter, in FIG. 8, for ease of understanding, instead of describing the CPU 132 as a subject of the process, the application 138 is described as the subject of the process.

In S210, the application 138 determines whether all service provision information in the management table 140 is "OFF". When all the service provision information is "OFF" (YES in S210), the application 138 proceeds to S212. On the other hand, when at least one piece of service provision information is "ON" (NO in S210), the application 138 ends the process of FIG. 8.

In step S212, the application 138 transmits a cartridge information request to a printer that is a transmission source of the print completion notification (hereinafter, may be referred to as a "target printer"). The cartridge information request is a signal for requesting transmission of cartridge information including the cartridge number of a cartridge installed in the target printer.

In S214, the application 138 receives the cartridge information from the target printer.

In S220, the application 138 determines whether the target printer supports the flat-rate service. The application 138 specifies a model name associated with the serial number of the target printer in the management table 140, transmits the specified model name to the server 200, and receives support information corresponding to the specified model name from the server 200. Then, the application 138 determines whether the support information received from the server 200 indicates "ON". When the support information indicates "ON" (YES in S220), the application 138 proceeds to S230, and when the support information indicates "OFF" (NO in S220), the application 138 ends the process of FIG. 8.

S230, S240, and S250 are similar to S40, S50, and S60 in FIG. 4, respectively, except that S230, S240, and S250 are executed by the application 138, the cartridge number in the cartridge information received from the target printer is used, and the cartridge number information in the memory 134 is used. In addition, S232, S242, and S252 are similar to S132, S142, and S152 of FIG. 6, respectively, except that S232, S242, and S252 are executed by the application 138 and the second notification screen SC2 to the fourth notification screen SC4 are displayed on the display unit 114 of the terminal device 100.

### Case B

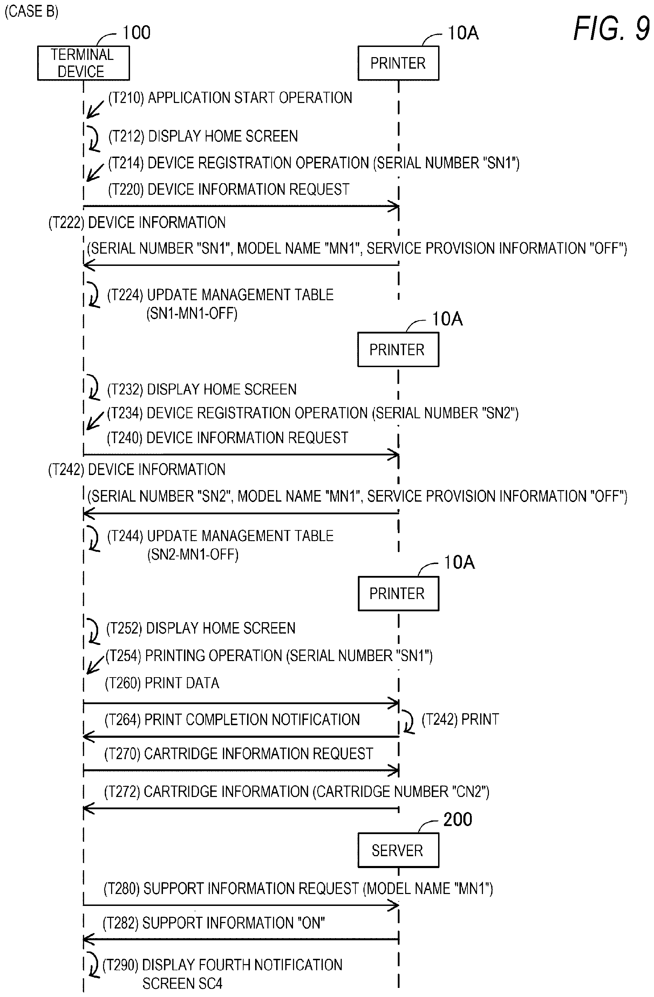

With reference to FIG. 9, a case B will be described in which printing is executed using the printer 10A in a state where a generic cartridge is installed in the printer 10A. In an initial state of case B, the management table 140 is empty.

When receiving an operation for starting the application 138 at T210, the terminal device 100 displays a home screen at T212. The home screen is a screen for executing printing using a printer registered in the application 138, and is a screen for registering a printer in the application 138. When receiving an operation for registering the printer 10A identified by the serial number "SN1" at T214, the terminal device 100 transmits a device information request to the printer 10A at T220.

When the printer 10A receives the device information request from the terminal device 100 at T220, the printer 10A specifies that the service flag 40 in the memory 34 is "OFF", and transmits device information including the serial number "SN1", the model name "MN1", and the service provision information "OFF" to the terminal device 100 at T222.

When the terminal device 100 receives the device information from the printer 10A at T222, the terminal device 100 stores the serial number "SN1", the model name "MN1", and the service provision information "OFF" in the management table 140 in association with each other at T224, and displays the home screen at T232. At this point, the user can cause the printer 10A to execute printing via the application 138. T234 is similar to T214 except that the serial number "SN2" is selected. T240 and T242 are similar to T220 and T222, respectively, except that a communication target is the printer 10B. In T242, the printer 10B transmits the device information including the serial number "SN2", the model name "MN1", and the service provision information "OFF" to the terminal device 100. When the terminal device 100 receives the device information from the printer 10B at T242, the terminal device 100 stores the serial number "SN2", the model name "MN1", and the service provision information "OFF" in association with each other in the management table 140 at T244, and displays the home screen at T252. At this point, the user can cause the printer 10A and the printer 10B to execute printing via the application 138. When receiving an operation for causing the printer 10A identified by the serial number "SN1" to execute printing at T254, the terminal device 100 transmits print data to the printer 10A at T260.

When the printer 10A receives the print data from the terminal device 100 at T260, the printer 10A performs printing using the print data at T262, and transmits a print completion notification to the terminal device 100 at T264.

When the terminal device 100 receives the print completion notification from the printer 10A in T264, the terminal device 100 determines that all the service provision information in the management table 140 is "OFF" (YES in S210 of FIG. 8), transmits the cartridge information request to the printer 10A in T270 (S212), and receives the cartridge information including the cartridge number "CN2" of the generic cartridge from the printer 10A in T272 (S214). Next, the terminal device 100 specifies the model name "MN1" associated with the serial number "SN1" of the printer 10A used for printing in the management table 140, transmits a support information request including the model name "MN1" to the server 200 in T280, and receives the support information "ON" from the server 200 in T282. The terminal device 100 determines that the received support information indicates "ON" (YES in S220). Next, the terminal device 100 specifies the genuine information "genuine" and the type information "generic" corresponding to the cartridge number "CN2" using the received cartridge number "CN2" and the cartridge number information in the memory 134. In this case, the terminal device 100 determines that the cartridge installed in the printer 10A is a genuine cartridge (YES in S230), determines that the cartridge is not a bundled cartridge (NO in S240), and determines that the cartridge is a generic cartridge (YES in S250). In this case, the terminal device 100 displays the fourth notification screen SC4 (see FIG. 2) at T290 (S252).

### Effects of Embodiment

According to the above configuration, when a cartridge installed in the printer 10 (that is, the installed cartridge) is the genuine cartridge (YES in S230 of FIG. 8), the terminal device 100 displays the first genuine message (S242, S252), and when the installed cartridge is the non-genuine cartridge (NO in S230), the terminal device 100 displays the non-genuine message (S232). According to such a configuration, the terminal device 100 can display an appropriate message according to the type of the cartridge installed in the printer 10. Accordingly, the convenience for the user can be improved.

Further, when the installed cartridge is a bundled cartridge (YES in S240), the terminal device 100 displays the first genuine message including the notification content for the bundled cartridge (S242), and when the installed cartridge is a generic cartridge (YES in S250), the terminal device 100 displays the first genuine message including the notification content for the generic cartridge (S252). According to such a configuration, the terminal device 100 can display an appropriate message corresponding to the type of the genuine cartridge in a state where a genuine cartridge is installed in the printer 10. Accordingly, the convenience for the user can be further improved.

Further, when the installed cartridge is the dedicated cartridge (NO in S250), the terminal device 100 does not display the first genuine message and the non-genuine message. According to such a configuration, it is possible to prevent the user from feeling bothered.

When the installed cartridge is the genuine cartridge (YES in S230) and the printer 10 supports the flat-rate service (YES in S220), the terminal device 100 displays the first genuine message (S242, S252); when the installed cartridge is the non-genuine cartridge (NO in S230) and the printer 10 supports the flat-rate service (YES in S220), the terminal device 100 displays the non-genuine message (S232); and when the printer 10 does not support the flat-rate service (NO in S220), the terminal device 100 does not display the first genuine message and the non-genuine message. According to such a configuration, it is possible to prevent the user from feeling bothered. Accordingly, the convenience for the user can be improved.

When the installed cartridge is the genuine cartridge (YES in S230 of FIG. 8) and all the service provision information in the memory 134 is "OFF" (YES in S210), the terminal device 100 displays the first genuine message (S242, S252); when the installed cartridge is the non-genuine cartridge (NO in S230) and all the service provision information in the memory 134 is "OFF" (YES in S210), the terminal device 100 displays the non-genuine message (S232); and when at least one piece of service provision information in the memory 134 is "OFF" (NO in S210), the terminal device 100 does not display the first genuine message and the non-genuine message. When at least one piece of service provision information in the memory 134 is "OFF", the user of the terminal device 100 is likely to know the flat-rate service. In such a situation, if a message for prompting subscription to the flat-rate service is displayed, the user may feel bothered. According to the above configuration, it is possible to prevent the user from feeling bothered.

### Correlation

S242 and S252 of FIG. 8 are examples of a process executed by the "first display controller" of a "computer of the terminal device". S232 of FIG. 8 is an example of a process executed by the "second display controller" of the "computer of the terminal device".

Although specific examples of the present invention have been described in detail above, these are merely examples and do not limit the scope of the claims. The technology described in the claims includes various modifications and variations of the specific examples given above. Modifications of the above embodiments are listed below.

### First Modification

In the first to third embodiments, the server 200 may be implemented by a single server or may include a plurality of servers.

### Second Modification

In the first embodiment, the server 200 specifies the type of cartridge. Alternatively, the printer 10 may specify the type of cartridge. In this case, the printer 10 transmits information indicating the type of cartridge (that is, the genuine information and the type information) to the server 200. In the present modification, the information indicating the type of cartridge is an example of "cartridge information".

### Third Modification

In the first illustrative embodiment, the server 200 may not periodically receive the printer information from the printer 10. In the present modification, when receiving the serial number from the terminal device 100, the server 200 transmits a printer information request to the printer 10 or the terminal device 100, and receives the printer information from the printer 10 or the terminal device 100.

### Fourth Modification

In the first embodiment to the third embodiment, the third notification screen data ND3 and the fourth notification screen data ND4 may be the same. That is, the notification content of the notification message displayed when the installed cartridge is a bundled cartridge may be the same as the notification content of the notification message displayed when the installed cartridge is a generic cartridge.

### Fifth Modification

The "first type of genuine cartridge" is not limited to the bundled cartridge, and may be a cartridge that is enclosed with the printer when the printer is sold, for example, a cartridge that is sold as a set with the printer.

### Sixth Modification

In the first embodiment, S70 may be omitted. In this modification, the "third message transmitting unit" may be omitted.

### Seventh Modification

In the second illustrative embodiment, the printer 10A may display the second genuine message when determination in S150 of FIG. 6 is NO. In the third embodiment, the terminal device 100 may display the second genuine message when determination in S250 of FIG. 8 is NO.

### Eighth Modification

S30 and S32 in FIG. 4 may be omitted. In this modification, the "model name receiving unit" and the "fourth message transmitting unit" may be omitted.

### Ninth Modification

In the second embodiment, the printer 10A may display the non-support message when determination in S120 of FIG. 6 is NO. Further, in the third illustrative embodiment, the terminal device 100 may display a non-support message when determination in S220 of FIG. 8 is NO.

### Tenth Modification

S110 of FIG. 6 may be omitted. In this modification, the printer 10A may not store the service flag 40. That is, the "service information" can be omitted.

### Eleventh Modification

S210 in FIG. 8 may be omitted. In the present modification, the terminal device 100 may not store the management table 140. That is, the "service provision information" may be omitted.

### Twelfth Modification

In each of the above embodiments, the processes in Figures 3 to 6, 8, and 9 are implemented by software (for example, programs 36, 136, 138, 236). Alternatively, at least one of these processes may be implemented by hardware such as a logic circuit.

In addition, the technical elements described in the present specification and the drawings exhibit technical usefulness independently or by various combinations, and are not limited to a combinations described in the claims at the time of the application. In addition, the techniques shown in the present specification and the drawings simultaneously achieve a plurality of objects, and achieving one of the objects itself has technical usefulness.

### Reference Signs List

2: communication system
4: LAN
6: Internet
10: printer
10A: printer
10B: printer
12: operation unit
14: display unit
16: print execution unit
18A: bundled cartridge
20: communication I/F
30: controller
32: CPU
34: memory
36: program
40: service flag
100: terminal device
112: operation unit
114: display unit
120: communication I/f
130: controller
132: CPU
134: memory
136: OS program
138: print application
140: management table
200: server
220: communication I/F
230: controller
232: CPU
234: memory
236: program
238: service table
240: device table
242: screen table

## Claims

1. A server that provides a service related to a printer, comprising:
a cartridge information receiving unit configured to receive, from the printer, cartridge information related to whether a cartridge installed in the printer is a genuine cartridge provided by a vendor of the printer or a non-genuine cartridge provided by a business entity other than the vendor;
a first message transmitting unit configured to transmit, to a terminal device different from the printer, a first message that prompts subscription to the service when identification information for identifying the printer is received from the terminal device and the cartridge information received from the printer identified by the identification information indicates that the genuine cartridge is installed in the printer; and
a second message transmitting unit configured to transmit, to the terminal device, a second message that prompts subscription to the service and is different from the first message when the identification information is received from the terminal device and the cartridge information received from the printer identified by the identification information indicates that the non-genuine cartridge is installed in the printer.

2. The server according to claim 1,
wherein the first message transmitting unit is configured to
transmit, to the terminal device, the first message including a first notification content when the identification information is received from the terminal device and the cartridge information received from the printer identified by the identification information indicates that a first type of the genuine cartridge is installed in the printer, the first type of genuine cartridge being enclosed with the printer when the printer is sold, and
transmit, to the terminal device, the first message including a second notification content different from the first notification content when the identification information is received from the terminal device and the cartridge information received from the printer identified by the identification information indicates that a second type of the genuine cartridge is installed in the printer, the second type of genuine cartridge being different from the first type of genuine cartridge and not enclosed with the printer when the printer is sold.

3. The server according to claim 2,
wherein the second type of genuine cartridge is a cartridge that is used by the printer in a state where the printer does not accept provision of the service, and is not used by the printer in a state where the printer accepts provision of the service, and
wherein the server further includes
a third message transmitting unit configured to transmit, to the terminal device, a third message that is different from the first message and the second message and that indicates the service has been subscribed to, when the identification information is received from the terminal device and the cartridge information received from the printer identified by the identification information indicates that a third type of the genuine cartridge is installed in the printer, the third type of genuine cartridge being different from the first type of genuine cartridge and the second type of genuine cartridge, not enclosed with the printer when the printer is sold, and used by the printer in a state where the printer accepts provision of the service.

4. The server according to claim 1, further comprising:
a model name receiving unit configured to receive from the printer a model name of the printer; and
a fourth message transmitting unit configured to transmit, to the terminal device, a fourth message indicating that the printer is not allowed to accept provision of the service when the identification information is received from the terminal device and the model name received from the printer identified by the identification information is a model name that is not allowed to accept provision of the service,
wherein the first message transmitting unit transmits the first message to the terminal device when the identification information is received from the terminal device, the cartridge information received from the printer identified by the identification information indicates that the genuine cartridge is installed in the printer, and the model name received from the printer identified by the identification information is a model name that is allowed to accept provision of the service, and
wherein the second message transmitting unit transmits the second message to the terminal device when the identification information is received from the terminal device, the cartridge information received from the printer identified by the identification information indicates that the non-genuine cartridge is installed in the printer, and the model name received from the printer identified by the identification information is a model name that is allowed to accept provision of the service.

5. The server according to claim 1, further comprising:
an identification information receiving unit configured to receive the identification information together with the cartridge information from the printer; and
a storage controller configured to store the identification information and the cartridge information in association with each other in a memory when the identification information and the cartridge information are received from the printer,
wherein the first message transmitting unit transmits the first message to the terminal device when the identification information is received from the terminal device and the cartridge information associated with the identification information in the memory indicates that the genuine cartridge is installed in the printer, and
wherein the second message transmitting unit transmits the second message to the terminal device when the identification information is received from the terminal device and the cartridge information associated with the identification information in the memory indicates that the non-genuine cartridge is installed in the printer.

6. A printer comprising:
a display unit;
a print execution unit in which a cartridge is detachably installed;
a first display controller configured to, when the cartridge installed in the print execution unit is a genuine cartridge provided by a vendor of the printer, cause the display unit to display a first message that prompts subscription to a service provided by a server; and
a second display controller configured to, when the cartridge installed in the print execution unit is a non-genuine cartridge provided by a business entity other than the vendor, cause the display unit to display a second message that prompts subscription to the service and is different from the first message.

7. The printer according to claim 6,
wherein the first display controller is configured to
cause the display unit to display the first message including a first notification content when the cartridge installed in the print execution unit is a first type of the genuine cartridge which is enclosed with the printer when the printer is sold, and
cause the display unit to display the first message including a second notification content different from the first notification content when the cartridge installed in the print execution unit is a second type of the genuine cartridge, the second type of genuine cartridge being different from the first type of genuine cartridge and not enclosed with the printer when the printer is sold.

8. The printer according to claim 7,
wherein the second type of genuine cartridge is a cartridge that is used by the printer in a state where the printer does not accept provision of the service, and is not used by the printer in a state where the printer accepts provision of the service, and
wherein the first message and the second message are not displayed when the cartridge installed in the print execution unit is a third type of the genuine cartridge, the third type of genuine cartridge being different from the first type of genuine cartridge and the second type of genuine cartridge, not enclosed with the printer when the printer is sold, and used by the printer in a state where the printer accepts provision of the service.

9. The printer according to claim 6,
wherein the first display controller causes the display unit to display the first message when the cartridge installed in the print execution unit is the genuine cartridge and the printer is able to accept provision of the service,
wherein the second display controller causes the display unit to display the second message when the cartridge installed in the print execution unit is the non-genuine cartridge and the printer is able to accept provision of the service, and
wherein the first message and the second message are not displayed when the printer is not able to accept provision of the service.

10. The printer according to claim 6, further comprising:
a memory storing service information indicating whether the printer accepts provision of the service,
wherein the first display controller causes the display unit to display the first message when the cartridge installed in the print execution unit is the genuine cartridge and the service information in the memory indicates that the printer does not accept provision of the service,
wherein the second display controller causes the display unit to display the second message when the cartridge installed in the print execution unit is the non-genuine cartridge and the service information in the memory indicates that the printer does not accept provision of the service, and
the first message and the second message are not displayed when the service information in the memory indicates that the printer accepts provision of the service.

11. An application program for a terminal device that causes a computer of the terminal device to function as following units:
a cartridge information receiving unit configured to receive, from a printer, cartridge information related to whether a cartridge installed in the printer is a genuine cartridge provided by a vendor of the printer or a non-genuine cartridge provided by a business entity other than the vendor;
a first display controller configured to, when the cartridge information indicates that the genuine cartridge is installed in the printer, cause a display unit of the terminal device to display a first message that prompts subscription to a service which is related to the printer and is provided by a server; and
a second display controller configured to, when the cartridge information indicates that the non-genuine cartridge is installed in the printer, cause the display unit to display a second message that prompts subscription to the service and is different from the first message.

12. The application program according to claim 11,
wherein the first display controller is configured to
cause the display unit to display the first message including a first notification content when the cartridge information indicates that a first type of the genuine cartridge is installed in the printer, the first type of genuine cartridge being enclosed with the printer when the printer is sold, and
cause the display unit to display the first message including a second notification content different from the first notification content when the cartridge information indicates that a second type of the genuine cartridge is installed in the printer, the second type of genuine cartridge being different from the first type of genuine cartridge and not enclosed with the printer when the printer is sold.

13. The application program according to claim 12,
wherein the second type of genuine cartridge is a cartridge that is used by the printer in a state where the printer does not accept provision of the service, and is not used by the printer in a state where the printer accepts provision of the service, and
wherein the first message and the second message are not displayed when the cartridge information indicates that a third type of the genuine cartridge is installed in the printer, the third type of genuine cartridge being different from the first type of genuine cartridge and the second type of genuine cartridge, not enclosed with the printer when the printer is sold, and used by the printer in a state where the printer accepts provision of the service.

14. The application program according to claim 11,
wherein the terminal device includes a model name receiving unit configured to receive from the printer a model name of the printer,
wherein the first display controller causes the display unit to display the first message when the cartridge information indicates that the genuine cartridge is installed in the printer and the model name is a model name that is allowed to accept provision of the service,
wherein the second display controller causes the display unit to display the second message when the cartridge information indicates that the non-genuine cartridge is installed in the printer and the model name is a model name that is allowed to accept provision of the service, and
wherein the first message and the second message are not displayed when the model name is a model name that is not allowed to accept provision of the service.

15. The application program according to claim 11,
the terminal device includes a memory storing service provision information indicating whether each of two or more printers including the printer accepts provision of the service
wherein the first display controller causes the display unit to display the first message when the cartridge information indicates that the genuine cartridge is installed in the printer and all pieces of service provision information in the memory indicates that provision of the service is not accepted,
wherein the second display controller causes the display unit to display the second message when the cartridge information indicates that the non-genuine cartridge is installed in the printer and all pieces of the service provision information in the memory indicates that provision of the service is not accepted, and
wherein the first message and the second message are not displayed when at least one piece of service provision information in the memory indicates that provision of the service is accepted.
